# FASCICULE DE BREVET EUROPEEN

(11) **EP 2 852 920 B1**
(45) Date de publication et mention de la délivrance du brevet: **27.04.2016**
(21) Numéro de dépôt: 13717282.1
(22) Date de dépôt: 19.04.2013
(51) Int. Cl.: G06K 19/073, G06K 19/07

(54) **SYSTEME D'ECHANGE DE DONNEES**
DATENAUSTAUSCHSYSTEM
DATA EXCHANGE SYSTEM

(30) Priorité: 21.05.2012 FR 1254621
(43) Date de publication de la demande: 01.04.2015
(73) Titulaire: Schneider Electric Industries SAS, 92500 Rueil-Malmaison (FR)
(72) Inventeur: MEFTAH, Tewfik, 38100 Grenoble (FR); GASSION, Romain, 38140 Izeaux (FR); CHICHE, Thierry, 38330 Saint Ismier (FR)
(74) Mandataire: Dufresne, Thierry
(86) Numéro de dépôt international: PCT/EP2013/058162
(87) Numéro de publication internationale: WO 2013/174586

(56) Documents cités:
- EP-A2- 0 827 100
- FR-A1- 2 810 766
- US-A1- 2007 106 765

## Description

### Domaine technique de l'invention

La présente invention se rapporte à un système d'échange de données.

### Etat de la technique

Il est connu de la demande de brevet EP1571511A2 une solution pour accéder de l'extérieur à une mémoire située à l'intérieur d'un appareil. Cette solution consiste à alimenter la mémoire grâce à un dispositif externe venant se connecter par une liaison sans fil à ladite mémoire.

Cette solution de l'état de la technique n'est pas satisfaisante car elle ne permet pas de garantir une communication sûre, sans perturbation, entre le microprocesseur et la mémoire lorsque le dispositif externe est présent à portée de l'appareil.

La demande de brevet EP0827100A2 décrit aussi un modem sans-contact employant un transpondeur RF et un lecteur pour accéder à distance à la mémoire d'un appareil électrique ou électromécanique. La mémoire du transpondeur étant directement connectée à la mémoire de l'appareil.

Le but de l'invention est de proposer un système d'échange de données permettant d'accéder de l'extérieur à une mémoire d'un appareil, tout en garantissant un échange de données sûr entre les circuits électroniques et ladite mémoire, même lorsque le dispositif externe est approché.

### Exposé de l'invention

Ce but est atteint par un système d'échange de données comportant un microprocesseur, une mémoire non volatile, un premier canal de communication reliant le microprocesseur à la mémoire non volatile et un premier canal d'alimentation agencé pour alimenter en énergie électrique le microprocesseur et la mémoire non volatile. Le système comporte également :
- un dispositif de commande,
- un deuxième canal de communication à travers lequel un dispositif externe peut échanger des données avec la mémoire non volatile,
- un deuxième canal d'alimentation agencé pour alimenter le dispositif de commande et la mémoire non volatile.

Le dispositif de commande présente les caractéristiques suivantes :
- des moyens de détection de l'énergie électrique dans le premier canal d'alimentation,
- des moyens de sélection entre le premier canal d'alimentation et le deuxième canal d'alimentation, le premier canal d'alimentation étant activé lorsqu'une énergie électrique est détectée dans le premier canal d'alimentation par les moyens de détection, le deuxième canal d'alimentation étant activable lorsqu'aucune énergie électrique n'est détectée dans le premier canal d'alimentation par les moyens de détection,
- des moyens de commande du deuxième canal de communication, le deuxième canal de communication étant activé lorsque le dispositif externe est présent et le deuxième canal d'alimentation activable, pour permettre l'échange de données entre le dispositif externe et la mémoire non volatile.

Selon une particularité, le dispositif de commande comporte un microcontrôleur et une interface de communication, ladite interface de communication gérant l'échange de données à travers le deuxième canal de communication.

Selon une autre particularité, l'interface de communication est agencée pour communiquer avec le dispositif externe par une technologie en champ proche.

Selon une autre particularité, le premier canal de communication se présente sous la forme d'un bus de communication, par exemple de type I2C.

Selon une autre particularité, les moyens de commande comportent un premier organe de commutation agencé pour réaliser une isolation galvanique entre le dispositif de commande et le premier canal de communication lorsque le deuxième canal de communication est désactivé.

Selon une autre particularité, les moyens de commande comportent un deuxième organe de commutation agencé pour réaliser une isolation galvanique entre le dispositif de commande et le premier canal d'alimentation lorsque le deuxième canal d'alimentation est désactivé.

### Brève description des figures

D'autres caractéristiques et avantages vont apparaître dans la description détaillée qui suit faite en regard des dessins annexés dans lesquels :
- la figure 1 représente, de manière schématique, le système d'échange de données de l'invention,
- la figure 2 représente, de manière schématique, le dispositif de commande employé dans le système d'échange de données de l'invention.

### Description détaillée d'au moins un mode de réalisation

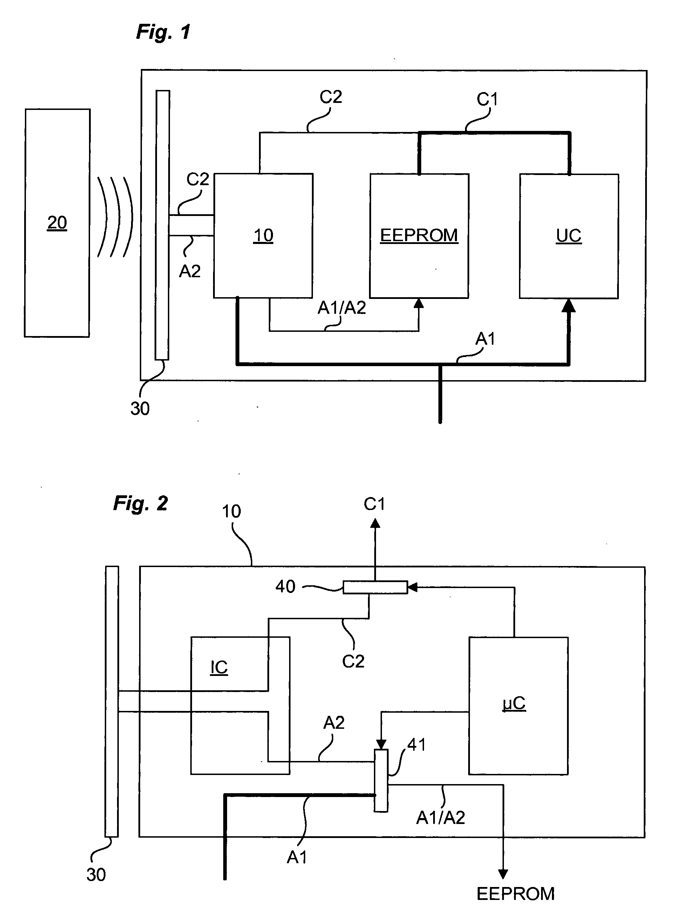

En référence à la figure 1, le système d'échange de données comporte un microprocesseur UC et une mémoire non volatile (référencée EEPROM), par exemple de type EEPROM. Il comporte également un premier canal de communication C1 à travers lequel le microprocesseur UC peut accéder à la mémoire non volatile EEPROM afin d'y lire et/ou d'y écrire des données. Ce premier canal de communication C1 se présente par exemple sous la forme d'un bus de communication, tel qu'un bus I2C (pour "Inter Integrated Circuit").

Le système comporte un premier canal d'alimentation A1 agencé pour alimenter en énergie électrique le microprocesseur UC et la mémoire non volatile EEPROM. Ce premier canal d'alimentation A1 est par exemple connecté à une source d'alimentation externe au système (non représentée).

Le système comporte également un dispositif de commande 10 permettant de gérer la communication et l'alimentation entre un dispositif 20 externe souhaitant accéder à la mémoire non volatile EEPROM depuis l'extérieur du système et les composants électroniques internes au système, c'est-à-dire le microprocesseur UC et la mémoire non volatile EEPROM.

Le système comporte un deuxième canal de communication C2 à travers lequel le dispositif 10 externe au système peut échanger des données avec la mémoire non volatile EEPROM. Le deuxième canal de communication C2 est relié au bus de communication.

Le système comporte un deuxième canal d'alimentation A2 agencé pour alimenter en énergie électrique le dispositif de commande 10 et la mémoire non volatile EEPROM.

En référence à la figure 2, le dispositif de commande 10 comporte un microcontrôleur µC et une interface de communication IC. Le microcontrôleur µC comporte des moyens de commande permettant de commander le deuxième canal de communication C2 et des moyens de sélection entre le premier canal d'alimentation A1 et le deuxième canal d'alimentation A2.

Selon l'invention, l'interface de communication IC est chargée de gérer l'échange des données entre le dispositif 20 externe et la mémoire non volatile EEPROM lorsque le deuxième canal de communication C2 est activé. Cette interface de communication IC permet de communiquer d'une part avec le dispositif 20 externe, via un premier protocole de communication et d'autre part avec la mémoire non volatile EEPROM, via un deuxième protocole de communication.

Selon l'invention, le premier protocole est par exemple mis en oeuvre à travers une technologie sans-fil en champ proche (NFC pour "Near Field Communication"). L'interface de communication IC est ainsi connectée à une antenne 30. Cette technologie permet donc au dispositif 20 externe de communiquer via le deuxième canal de communication C2 et également d'alimenter le dispositif de commande 10 et la mémoire non volatile EEPROM via le deuxième canal d'alimentation A2. Préférentiellement, la technologie en champ proche employée est la RFID (pour "Radiofrequency Identification").

Selon l'invention, le deuxième protocole de communication utilisé sur le bus de communication entre le dispositif de commande 10 et l'EEPROM est de type maître/esclave.

Dans un exemple de réalisation, le premier canal d'alimentation A1 est connecté directement au microprocesseur UC et est connecté à la mémoire non volatile EEPROM en traversant le dispositif de commande 10. Le deuxième canal d'alimentation A2 est connecté à l'antenne 30 et à la mémoire non volatile EEPROM, en traversant le dispositif de commande 10.

Le premier canal d'alimentation A1 et le deuxième canal d'alimentation A2 sont ainsi connectés en parallèle au dispositif de commande 10. Tant qu'une énergie électrique est détectée dans le premier canal d'alimentation A1, les moyens de sélection maintiennent le premier canal d'alimentation activé et le deuxième canal d'alimentation A2 désactivé, même si un dispositif externe est présent. La communication entre le microprocesseur UC et la mémoire non volatile EEPROM à travers le premier canal de communication C1 n'est donc pas perturbée, même en présence du dispositif 20 externe à portée de l'antenne 30. Lorsqu'aucune énergie électrique ne transite par le premier canal d'alimentation A1 et lorsque le dispositif 20 externe est présent, les moyens de sélection activent lé deuxième canal d'alimentation A2 et les moyens de commande activent le deuxième canal de communication C2. Ainsi le dispositif 20 externe peut échanger des données avec la mémoire non volatile EEPROM à travers le deuxième canal de communication C2.

Pour assurer des communications sûres, le dispositif de commande comporte aux moins deux organes de commutation 40, 41 permettant de réaliser l'activation ou la désactivation du deuxième canal de communication C2, du premier canal d'alimentation A1 et du deuxième canal d'alimentation A2. Lors de la désactivation du deuxième canal de communication C2, le premier organe de commutation 40 est agencé pour réaliser une isolation galvanique entre le dispositif de commande 10 et le bus de communication. Lors de la désactivation du deuxième canal d'alimentation A2, le deuxième organe de commutation 41 est agencé pour réaliser une isolation galvanique entre le dispositif de commande 10 et le premier canal d'alimentation A1. Ainsi, il est possible de garantir un échange de données sûr, sans perturbation, entre le microprocesseur UC et la mémoire non volatile EEPROM.

Lorsqu'une énergie électrique transite dans le premier canal d'alimentation A1, le dispositif de commande 10 est alors isolé de manière galvanique du bus de communication et de la source d'alimentation connectée au premier canal d'alimentation A1.

Si aucune énergie électrique n'est détectée dans le premier canal d'alimentation A1 et si le dispositif 20 externe est présent à portée de l'antenne 30, le dispositif de commande 10 est connecté au bus de communication, par activation du deuxième canal de communication C2.

La détection d'énergie électrique dans le premier canal d'alimentation A1 pourra être réalisée par tous moyens appropriés. Il pourra s'agir par exemple d'une mesure de tension.

Selon une variante de réalisation de l'invention, les organes de commutation pourront par exemple être actionnés manuellement et non par le microcontrôleur µC du dispositif de commande 10.

Le système de l'invention permet ainsi de pouvoir accéder à une mémoire non volatile depuis l'extérieur d'un appareil, sans perturber le fonctionnement normal dudit appareil. Le système permet l'échange d'une grande quantité de données en tenant compte des interruptions dues aux manques en énergie électrique et aux pertes de communication. Il permet de garantir un fonctionnement sûr, quelle que soit la situation, et peut facilement s'adapter sur un appareil existant. Les données échangées sont par exemples liées à des mises à jour logicielles ou à des paramètres de fonctionnement d'une application.

## Revendications

1. Système d'échange de données comportant:
- un microprocesseur (UC),
- une mémoire non volatile (EEPROM),
- un premier canal de communication (C1) reliant le microprocesseur à la mémoire non volatile
- un premier canal d'alimentation (A1) agencé pour alimenter en énergie électrique le microprocesseur et la mémoire non volatile,
- un dispositif de commande (10),
- un deuxième canal de communication (C2) à travers lequel un dispositif (20) externe peut échanger des données avec la mémoire non volatile,
- un deuxième canal d'alimentation (A2) agencé pour alimenter le dispositif de commande (10) et la mémoire non volatile,
le système étant **caractérisé en ce que** - le dispositif de commande (10) comporte:
- des moyens de détection de l'énergie électrique dans le premier canal d'alimentation (A1),
- des moyens de sélection entre le premier canal d'alimentation (A1) et le deuxième canal d'alimentation (A2), le premier canal d'alimentation (A1) étant activé lorsqu'une énergie électrique est détectée dans le premier canal d'alimentation (A1) par les moyens de détection, le deuxième canal d'alimentation (A2) étant activable lorsqu'aucune énergie électrique n'est détectée dans le premier canal d'alimentation (A1) par les moyens de détection,
- des moyens de commande du deuxième canal de communication (C2), le deuxième canal de communication (C2) étant activé lorsque le dispositif (20) externe est présent et le deuxième canal d'alimentation (A2) activable, pour permettre l'échange de données entre le dispositif externe et la mémoire non volatile.

2. Système selon la revendication 1, **caractérisé en ce que** le dispositif de commande (10) comporte un microcontrôleur (µC) et une interface de communication (IC), ladite interface de communication (IC) gérant l'échange de données à travers le deuxième canal de communication (C2).

3. Système selon la revendication 2, **caractérisé en ce que** l'interface de communication (IC) est agencée pour communiquer avec le dispositif (20) externe par une technologie en champ proche.

4. Système selon l'une des revendications 1 à 3, **caractérisé en ce que** le premier canal de communication (C1) se présente sous la forme d'un bus de communication.

5. Système selon la revendication 4, **caractérisé en ce que** le bus de communication est de type I2C.

6. Système selon l'une des revendications 1 à 5, **caractérisé en ce que** les moyens de commande comportent un premier organe de commutation (40) agencé pour réaliser une isolation galvanique entre le dispositif de commande et le premier canal de communication (C1) lorsque le deuxième canal de communication (C2) est désactivé.

7. Système selon la revendication 6, **caractérisé en ce que** les moyens de commande comportent un deuxième organe de commutation (41) agencé pour réaliser une isolation galvanique entre le dispositif de commande (10) et le premier canal d'alimentation (A1) lorsque le deuxième canal d'alimentation (A2) est désactivé.

## Patentansprüche

1. Datenaustauschsystem, das enthält
- einen Mikroprozessor (UC),
- einen nicht-flüchtigen Speicher (EEPROM),
- einen ersten Kommunikationskanal (C1), der den Mikroprozessor mit dem nicht-flüchtigen Speicher verbindet,
- einen ersten Versorgungskanal (A1), der eingerichtet ist, um den Mikroprozessor und den nicht-flüchtigen Speicher mit elektrischer Energie zu versorgen,
- eine Steuervorrichtung (10),
- einen zweiten Kommunikationskanal (C2), über den eine externe Vorrichtung (20) Daten mit dem nicht-flüchtigen Speicher austauschen kann,
- einen zweiten Versorgungskanal (A2), der eingerichtet ist, um die Steuervorrichtung (10) und den nicht-flüchtigen Speicher zu versorgen,
wobei das System **dadurch gekennzeichnet ist, dass** die Steuervorrichtung (10) aufweist:
- Einrichtungen zur Erfassung der elektrischen Energie im ersten Versorgungskanal (A1),
- Einrichtungen zur Wahl zwischen dem ersten Versorgungskanal (A1) und dem zweiten Versorgungskanal (A2), wobei der erste Versorgungskanal (A1) aktiviert wird, wenn eine elektrische Energie im ersten Versorgungskanal (A1) von den Erfassungseinrichtungen erfasst wird, während der zweite Versorgungskanal (A2) aktivierbar ist, wenn keine elektrische Energie im ersten Versorgungskanal (A1) von den Erfassungseinrichtungen erfasst wird,
- Steuereinrichtungen des zweiten Kommunikationskanals (C2), wobei der zweite Kommunikationskanal (C2) aktiviert wird, wenn die externe Vorrichtung (20) vorhanden und der zweite Versorgungskanal (A2) aktivierbar ist, um den Datenaustausch zwischen der externen Vorrichtung und dem nicht-flüchtigen Speicher zu ermöglichen.

2. System nach Anspruch 1, **dadurch gekennzeichnet, dass** die Steuervorrichtung (10) einen Mikrocontroller (µC) und eine Kommunikationsschnittstelle (IC) aufweist, wobei die Kommunikationsschnittstelle (IC) den Datenaustausch über den zweiten Kommunikationskanal (C2) verwaltet.

3. System nach Anspruch 2, **dadurch gekennzeichnet, dass** die Kommunikationsschnittstelle (IC) eingerichtet ist, um mit der externen Vorrichtung (20) über eine Nahfeld-Technologie zu kommunizieren.

4. System nach einem der Ansprüche 1 bis 3, **dadurch gekennzeichnet, dass** der erste Kommunikationskanal (C1) in Form eines Kommunikationsbusses vorliegt.

5. System nach Anspruch 4, **dadurch gekennzeichnet, dass** der Kommunikationsbus von der Art I2C ist.

6. System nach einem der Ansprüche 1 bis 5, **dadurch gekennzeichnet, dass** die Steuereinrichtungen ein erstes Schaltorgan (40) aufweisen, das eingerichtet ist, um eine galvanische Trennung zwischen der Steuervorrichtung und dem ersten Kommunikationskanal (C1) herzustellen, wenn der zweite Kommunikationskanal (C2) deaktiviert ist.

7. System nach Anspruch 6, **dadurch gekennzeichnet, dass** die Steuereinrichtungen ein zweites Schaltorgan (41) aufweisen, das eingerichtet ist, um eine galvanische Trennung zwischen der Steuervorrichtung (10) und dem ersten Versorgungskanal (A1) herzustellen, wenn der zweite Versorgungskanal (A2) deaktiviert ist.

## Claims

1. A data interchange system comprising:
- a microprocessor (UC),
- a nonvolatile memory (EEPROM),
- a first communication channel (C1) connecting the microprocessor to the nonvolatile memory,
- a first power supply channel (A1) designed to supply electric power to the microprocessor and the nonvolatile memory,
- a control device (10),
- a second communication channel (C2), through which an external device (20) can interchange data with the nonvolatile memory,
- a second power supply channel (A2) designed to supply power to the control device (10) and the nonvolatile memory,
the system being **characterized in that** the control device (10) comprises:
- means for detecting the electric power in the first power supply channel (A1),
- means for selecting between the first power supply channel (A1) and the second power supply channel (A2), the first power supply channel (A1) being activated when electric power is detected in the first power supply channel (A1) by the detection means, the second power supply channel (A2) being activatable when no electric power is detected in the first power supply channel (A1) by the detection means,
- means for controlling the second communication channel (C2), the second communication channel (C2) being activated when the external device (20) is present and the second power supply channel (A2) is activatable, in order to allow the interchange of data between the external device and the nonvolatile memory.

2. The system as claimed in claim 1, **characterized in that** the control device (10) has a microcontroller (µC) and a communication interface (IC), said communication interface (IC) managing the interchange of data through the second communication channel (C2).

3. The system as claimed in claim 2, **characterized in that** the communication interface (IC) is designed to communicate with the external device (20) by means of a near-field technology.

4. The system as claimed in one of claims 1 to 3, **characterized in that** the first communication channel (C1) is in the form of a communication bus.

5. The system as claimed in claim 4, **characterized in that** the communication bus is of I2C type.

6. The system as claimed in one of claims 1 to 5, **characterized in that** the control means have a first switching element (40) designed to provide DC isolation between the control device and the first communication channel (C1) when the second communication channel (C2) is deactivated.

7. The system as claimed in claim 6, **characterized in that** the control means have a second switching element (41) designed to provide DC isolation between the control device (10) and the first power supply channel (A1) when the second power supply channel (A2) is deactivated.
